# EUROPEAN PATENT APPLICATION

(11) **EP 3 709 458 A1**
(43) Date of publication of application: **16.09.2020**
(21) Application number: 19162959.1
(22) Date of filing: 14.03.2019
(51) Int. Cl.: H02G 1/10, E02F 5/10

(54) **METHOD FOR OFFSHORE INSTALLING OF POWER CABLES OR TUBES FOR POWER CABLES FOR WIND TURBINE INSTALLATIONS AND SEABED VEHICLE**

(71) Applicant: Siemens Gamesa Renewable Energy A/S, 7330 Brande (DK)
(72) Inventor: Soerensen, Johnny, 6920 Videbæk (DK)
(74) Representative: Aspacher, Karl-Georg

(57) **Abstract**

A method for offshore installing of power cables or tubes (17) for power cables for wind turbine installations (2, 3), wherein an end of an incoming power cable and an end of an outgoing power cable or an end (33) of an incoming tube (31) and an end (34) of an outgoing tube (32) are pulled (S4) into an offshore wind turbine installation (2) simultaneously.

By pulling both ends of the incoming and outgoing power cables/tubes into the offshore wind turbine installation simultaneously, the ends of the incoming and outgoing power cables/tubes can be pulled into the offshore wind turbine installation in a single process step.

## Description

The present invention relates to a method for offshore installing of power cables or tubes for power cables for wind turbine installations and a seabed vehicle.

An offshore installation, such as an offshore wind turbine, requires a transmission link to another offshore or an onshore installation, e.g. for transmission of generated power. The transmission link is, for example, provided by directly installing power cables in or above the seabed between several offshore positions, e.g. between wind turbine foundations and/or a substation. Alternatively, as proposed in EP 3 086 424 B1, power cables are installed between several offshore positions by the use of empty tubes. The power cables are inserted into the empty tubes after installing the empty tubes in or above the seabed.

Power cabling of several offshore wind turbines, e.g., of an offshore wind park, is - with or without the use of empty tubes - a time and cost consuming process.

In a first conventional approach, power cabling is done section by section. That means, that for each section between neighboring offshore positions a seabed vehicle is lowered from a vessel to trench the seabed between these positions and lay a power cable or tube supplied by a vessel into the trench. Then, the seabed vehicle is lifted up again to the vessel. Thus, in this approach, the seabed vehicle has to be lowered from the vessel to the seabed and lifted up again for each single offshore wind turbine.

In a second conventional approach, as proposed in EP 3 086 424 B1, empty tubes are installed in a continuous manner by a seabed vehicle without lowering and lifting the seabed vehicle for every single offshore wind turbine. This is realized by installing the empty tubes in a region close to each wind turbine installation in an overlapping manner. The two overlapping tubes are supplied by two suppliers on a first vessel. The tubes are cut by the seabed vehicle or by means of a second vessel such that the free ends of the tubes float toward the sea level. In a further process step, the free ends of the tubes are guided through separate openings in the wind turbine foundation and installed inside.

It is one object of the present invention to provide an improved method for offshore installing of power cables or tubes for power cables for wind turbine installations and an improved seabed vehicle.

Accordingly, a method for offshore installing of power cables or tubes for power cables for wind turbine installations is proposed, wherein an end of an incoming power cable and an end of an outgoing power cable or an end of an incoming tube and an end of an outgoing tube are pulled into an offshore wind turbine installation simultaneously.

By pulling both ends of the incoming and outgoing power cables/tubes into the offshore wind turbine installation simultaneously, the ends of the incoming and outgoing power cables/tubes can be pulled into the offshore wind turbine installation in a single process step. For example, they can be pulled by a single pulling device, such as a single winch. Thus, they can be pulled in more easily. Further, the incoming and outgoing power cables/tubes can be kept in close proximity to each other during pulling. Thus, they can be easily pulled through a single opening of the offshore wind turbine installation, in particular of its foundation. Further, they take up less space inside the wind turbine installation, in particular its foundation.

The offshore wind turbine installation is, for example, a wind turbine or a substation of a wind farm.

Offshore does not only include marine environments but also lakes and other open waters.

A wind turbine is an apparatus to convert the wind's kinetic energy into electrical energy. The wind turbine comprises, for example, a rotor having one or more blades, a nacelle including a generator, and a tower holding, at its top end, the nacelle. The tower of the wind turbine is connected to a foundation of the wind turbine such as a monopile, tripile or tripod in the seabed.

The offshore wind turbine can be part of a wind farm. The wind farm is, in particular, an array of inter-connected wind turbines. The offshore wind turbine can be, for example, connected by the power cable and/or tube to a neighboring wind turbine and/or a substation of the wind farm.

A substation of a wind farm, also called collector substation, is, in particular, a station configured to collect the energy generated by all or several of the wind turbines of the wind farm. The substation is configured to receive the energy generated by the wind turbines through the power cables.

The power cables are, in particular, electrical cables configured for transmission of energy generated by the offshore wind turbine installation to another offshore wind turbine installation and/or an onshore installation.

The tubes are, in particular, empty tubes. The tubes are, in particular, long and flexible. The tubes are, for example, flexible enough to be wound up on a reel or drum. The tubes are used to guide and protect the power cables inserted into them after installation of the tubes. The tubes are, for example, made of plastic, thermoplastics, polyethylene and/or high-density polyethylene.

The incoming and outgoing power cables are not restricted to the case that power is supplied through the incoming power cable and power is outgoing through the outgoing power cable. Further, the incoming and outgoing tubes are not restricted to the case that power is supplied through a power cable inserted into the incoming tube and power is outgoing through a power cable inserted into the outgoing tube. Instead of "incoming" and "outgoing" the terms "first" and "second" can be used, respectively.

The ends of the incoming and outgoing power cables/tubes are, for example, pulled from the outside area of the offshore wind turbine installation below sea level, through an opening of the foundation of the offshore wind turbine installation below sea level into the interior of the foundation and up to a level, for example a platform, where they are further processed. In the case of power cables, the further processing may include electrical connection with electrical cables transmitting the power generated by the generator in the nacelle. In the case of tubes, the further processing may also include inserting power cables into the tubes.

According to an embodiment, the incoming and outgoing power cables or the incoming and outgoing tubes are, during pulling their ends into the offshore wind turbine installation, of one piece such that their pulled in ends are continuous with each other.

Pulling the ends of the incoming and outgoing power cables/tubes into the offshore wind turbine installation in a state where the incoming and outgoing power cables/tubes are in one piece, allows to easily grab them and pull them into the wind turbine installation. For example, it allows to grab them in a single process step using a single pulling head, a single robotic arm of a seabed vehicle and/or a single messenger cable as pulling rope.
Furthermore, by the one-piece configuration, the incoming and outgoing power cables/tubes can be provided continuously, e.g., by unwinding them from a vessel, while avoiding cutting them below sea level. Moreover, a process step of catching and/or fixing free ends of the incoming and outgoing power cables/tubes, e.g., freely floating in the sea, is not necessary.

The pulled in ends of the incoming and outgoing power cables/tubes being continuous with each other includes, in particular, that the end of incoming power cable/tube is also the end of the outgoing power cable/tube. Further, it includes cases in which the incoming and outgoing power cables/tubes are bent, sharply bent and/or buckled at their continuous ends. This can include damages of the incoming and outgoing power cables/tubes at their ends due to the bending and/or buckling process.

According to a further embodiment, pulling the ends of the incoming and outgoing power cables or of the incoming and outgoing tubes into the offshore wind turbine installation includes bending the incoming and outgoing power cables or the incoming and outgoing tubes relative to each other at their continuous ends.

By bending the incoming and outgoing power cables/tubes relative to each other at their continuous ends they can be better fitted through an opening in the (foundation of the) offshore wind turbine installation. For example, they can be fitted through an opening with a diameter of smaller than 1 meter, preferably smaller than half a meter. Further, they can be better pulled through the interior of the (foundation of the) offshore wind turbine installation.

The incoming and outgoing power cables/tubes are, for example, folded towards each other. The bending can include sharp bending such that the bent incoming and outgoing power cables/tubes are partly parallel to each other and/or that an angle between them is an acute angle, an angle of smaller than 45 degrees, smaller than 30 degrees and/or smaller than 15 degrees.

According to a further embodiment, pulling the ends of the incoming and outgoing power cables or of the incoming and outgoing tubes into the offshore wind turbine installation includes connecting a pulling head with the ends of the incoming and outgoing power cables or with the ends of the incoming and outgoing tubes.

By having the pulling head the pulling can be performed more easily.

The pulling head is connected with the ends of the incoming and outgoing power cables/tubes, for example, by means of a crane and/or robotic arm of a seabed vehicle. Prior to connecting the pulling head with the ends of the incoming and outgoing power cables/tubes, the pulling head is, for example, connected with a messenger cable acting as a pulling rope.

The pulling head can also have a bending function. For example, by attaching the pulling head with bending function to the incoming and outgoing power cables/tubes and pulling on the pulling head, the incoming and outgoing power cables/tubes are folded to each other and are then pulled in the folded state towards and into the wind turbine installation.

According to a further embodiment, the method comprises, after the step of pulling, the step of cutting the incoming and outgoing power cables or the incoming and outgoing tubes at their continuous ends inside the offshore wind turbine installation.

By cutting the incoming and outgoing power cables/tubes inside the offshore wind turbine installation, they can be cut more easily. In particular, they can be cut in a dry and shielded environment. In particular, they can be cut without the use of any seabed vehicle and/or underwater vehicle.
The cutting of the incoming and outgoing power cables/tubes may include cutting off any portions of the cables/tubes that have been damaged by attaching the pulling head and/or by a bending process.

According to a further embodiment, the method comprises the steps of:
installing a power cable or a tube on or in a seabed by means of a seabed vehicle, and
providing an additional length of the power cable or tube close to the offshore wind turbine installation, the additional length forming the incoming and outgoing power cables or the incoming and outgoing tubes.

The power cable or tube is, for example, lowered from sea level where a supply of reeled-up power cable or tube is provided by a support vessel.

The power cable or tube is installed on or in the seabed, for example, along a main installation path by laying it on the seabed or by burying it into the seabed by means of the seabed vehicle.

The provided additional length is forming the incoming and outgoing power cables/tubes which are configured to cover the path from the main installation path to and from the offshore wind turbine installation and the inside of the offshore wind turbine installation.

Advantageously, providing additional length of the power cables/tubes on-site close to the offshore wind turbine installation enables installation of a single continuing power cable/tube. A support vessel providing the power cable/tube could either slow down in speed or the feeding speed of the power cable/tube could be increased during providing the additional length.

The step of providing the additional length of the power cable/tube is, for example, performed partly prior to the step of pulling the incoming and outgoing power cables/tubes into the offshore wind turbine installation. For example, the seabed vehicle is paying out a first portion of the additional length. The first portion is, for example, forming the incoming power cable/tube. Then, by pulling on this first portion while continuously unwinding the cable/tube from the support vessel, a second portion of the additional length is provided. The second portion is, for example, forming the outgoing power cable/tube.

In the case of a tube, in particular an empty tube filled with air, the additional length payed out by the seabed vehicle prior to pulling (e.g., the first portion of the additional length) may float in the sea water forming, for example, a loop.

In the case of a power cable, the additional length payed out by the seabed vehicle prior to pulling may sink to the sea bed. In embodiments, bouyancy means could be attached to the power cable.

According to a further embodiment, the additional length of the power cable or tube is provided by lifting a depressor of the seabed vehicle.

The depressor is, for example, movably and/or pivotably supported by a main frame of the seabed vehicle such that it can move up and down and/or pivot upwards and downwards. The moving/pivoting of the depressor can, for example, be remotely controlled. Thus, the additional length can be provided easily, e.g., automatically.

According to a further embodiment, the additional length of the power cable or tube is provided by rotating a depressor wheel of the depressor of the seabed vehicle.

Rotating the depressor wheel allows to better pay out the additional length.

The depressor comprises the depressor wheel and, for example, a pivoting member. The depressor wheel is, for example, supported rotatably by the pivoting member. The pivoting member is, for example, supported pivotably by the main frame or a plough of the seabed vehicle. The power cable/tube is, for example, guided along and below the pivoting member and the depressor wheel. The depressor is, for example, lifted by pivoting the pivoting member upwards.

According to a further embodiment, the power cable or tube is installed on or in the seabed by forming a trench in the seabed and laying the power cable or tube into the trench.

According to a further embodiment, after laying the power cable or tube into the trench, the trench is buried by means of the seabed vehicle.

According to a further embodiment, the ends of the incoming and outgoing power cables or of the incoming and outgoing tubes are pulled into the offshore wind turbine installation by means of a messenger cable acting as a pulling rope.

Using a messenger cable allows to better pull in the ends of the incoming and outgoing power cables/tubes, in particular as they may be very heavy.

According to a further embodiment, prior to installing the power cable or tube on or in the seabed by means of the seabed vehicle, one end of the messenger cable is installed inside the offshore wind turbine installation and the other end of the messenger cable is provided outside of the offshore wind turbine installation and below sea level.

By having the other end of the messenger cable provided outside of the offshore wind turbine installation, it is brought in place and ready for connection with the incoming and outgoing power cable/tube when the seabed vehicle is driving by.

Having the ends of messenger cables for several neighboring offshore wind turbine installations provided at their outsides, the seabed vehicle can drive by the several neighboring offshore wind turbine installations for connecting them with power cables/tubes.

The one end of the messenger cable installed inside the offshore wind turbine installation is, for example, connected with pulling means, such as a winch. The winch may be configured to wind up the messenger cable, thereby pulling the ends of the incoming and outgoing power cables/tubes into the wind turbine installation.

The other end of the messenger cable is provided outside of the offshore wind turbine installation, for example, by means of an additional underwater vehicle. The other end of the messenger cable may be connected with the pulling head, for example by the additional underwater vehicle.

According to a further embodiment, the other end of the messenger cable is provided with buoyancy means.

Thus, the other end of the messenger cable will float in the sea water, for example slightly above the seabed. Therefore, the messenger cable can be more easily connected with the incoming and outgoing power cables/tubes.

According to a further embodiment, the ends of the incoming and outgoing power cables or the ends of the incoming and outgoing tubes are pulled into the offshore wind turbine installation up to a height above sea level.

The ends are, for example, pulled up to a platform above sea level.

According to a further aspect a seabed vehicle is provided for performing at least one step of the previously described method. The seabed vehicle comprises:
- a main frame,
- skids for skidding on the seabed, the skids being fixed to the main frame,
- a plough for forming a trench in the seabed, the plough being fixed to the main frame,
- burying means for burying the trench after a power cable or tube supplied by a vessel has been laid in the trench,
- a pivotable and rotatable depressor for holding down the power cable or tube in the trench prior to burying it and for providing an additional length of the power cable or tube at the offshore wind turbine installation by lifting the depressor, the additional length forming the incoming and outgoing power cables or the incoming and outgoing tubes of the offshore wind turbine installation, wherein the depressor comprises a depressor wheel and a pivoting member, the depressor wheel being supported rotatably by the pivoting member, the pivoting member being supported pivotably by the main frame or the plough, and
- a robotic arm for grabbing the messenger cable acting as pulling rope and fixing the messenger cable to the power cable or tube, the robotic arm being fixed to the main frame.

The embodiments and features described with reference to the method of the present invention apply mutatis mutandis to the seabed vehicle of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a wind park with wind turbines according to an embodiment;
- Fig. 2: shows a seabed vehicle installing a tube in the seabed while approaching one of the wind turbines of Fig. 1 according to an embodiment;
- Fig. 3: shows another view of the seabed vehicle of Fig. 2;
- Fig. 4: shows how the seabed vehicle from Figs. 2 and 3 provides an additional length of the tube close to the wind turbine of Fig. 2 according to an embodiment;
- Fig. 5: shows a detailed view of Fig. 4 in which a pulling head with a messenger cable is connected to the additional length of the tube;
- Fig. 6: shows a detailed view of the pulling head from Fig. 5 in an initial position;
- Fig. 7: shows a detailed view of the pulling head from Fig. 5 in an activated position;
- Fig. 8: shows a view similar as Fig. 5 but with the pulling head in the activated state of Fig. 7;
- Fig. 9: shows how the additional length of the tube is pulled into the wind turbine of Fig. 2 according to an embodiment, the additional length forming the incoming and outgoing tube of the wind turbine; and
- Fig. 10: shows a flowchart illustrating a method for offshore installing of power cables or tubes for power cables, such as the tube of Figs. 2 and 4 to 9, for the wind turbine of Fig. 2 according to an embodiment.

In the Figures, like reference numerals designate like or functionally equivalent elements, unless otherwise indicated.

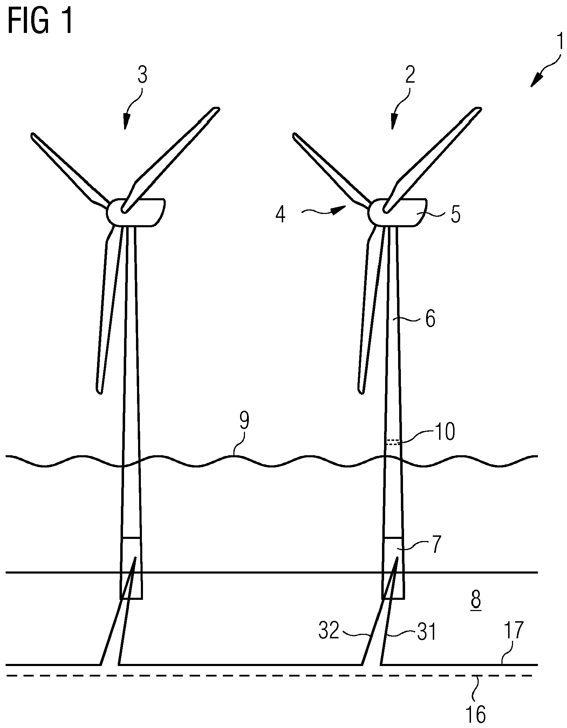

Fig. 1 shows an offshore wind farm 1 according to an embodiment. The offshore wind farm 1 comprises several offshore wind turbines. As an example, an offshore wind turbine 2 and another offshore wind turbine 3 of the wind farm 1 are shown in Fig. 1.

Each of the wind turbines 2 and 3 comprises a rotor 4 connected to a generator (not shown) arranged inside a nacelle 5. The nacelle 5 is arranged at the upper end of a tower 6 of the wind turbine 2, 3. The tower 6 is erected on a foundation 7 such as a monopile or tripile. The foundation 7 is connected to and/or driven into the seabed 8. The sea water is denoted with the reference numeral 9.

During operation of the wind turbine 2, 3, the wind's kinetic energy is converted into electrical energy by the generator in the nacelle 5. The power generated in the generator is transmitted via an interior power cable to a switch gear (not shown) in a lower part of the tower 6. The generated power is transmitted from the switch gear via a further interior power cable (not shown) to a hang-off zone 10 of the lower part of the tower 6. For an electrical connection from the hang-off zone 10 onward, electrical transmission means are required to connect the interior power cable of the wind turbine 2 to another offshore installation such as the wind turbine 3.

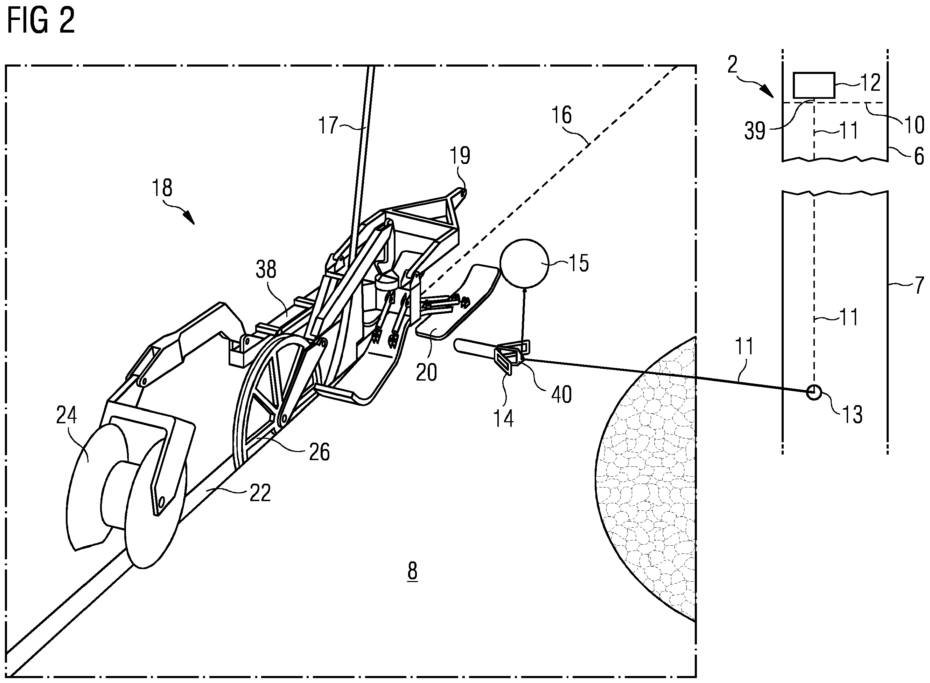

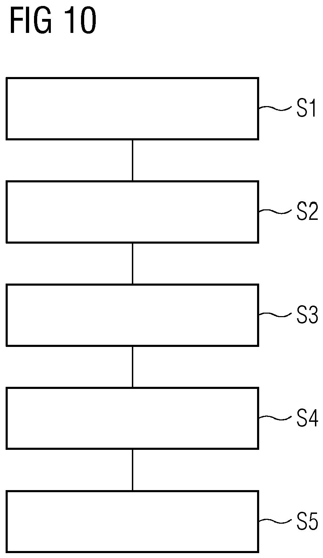

In the following an improved method for offshore installing of power cables or tubes for power cables for wind turbine installations is described with respect to Figs. 2 to 10.

In step S1 of the method, a messenger cable 11 (Fig. 2) is provided at the wind turbine 2. One end 39 of the messenger cable 11 is connected to a winch 12 arranged at the hang-off platform 10 of the wind turbine 2. From there, the messenger cable 11 is unreeled from the winch 12 and guided through the interior of the lower part of the tower 6 and of the foundation 7. The messenger cable 11 is guided through an opening 13 to the outside of the wind turbine 2. At the outside of the wind turbine 2, a remotely operated underwater vehicle (ROV, not shown) lowered from a first vessel (not shown) connects the messenger cable 11 at its other end 40 with a pulling head 14 (Fig. 2). The ROV also connects buoyancy means 15, such as an air-filled balloon, with the pulling head 14. The buoyancy means 15 cause the pulling head 14 to float above the sea bed 8. The ROV positions the pulling head 14 close to a main installation path 16 of a tube 17 (a power cable could be provided instead of the tube 17) such that the messenger cable 11 with the pulling head 14 is brought in place for the tube 17 to arrive in the next step.

In step S2, the tube 17 is installed in the seabed 8 by means of a seabed vehicle 18. The seabed vehicle 18 has been lowered from a support vessel (not shown) at the beginning of the installation path 16, e.g., at a first offshore wind turbine along the installation path 16. The seabed vehicle 18 is pulled at a pulling yoke 19 by the support vessel. The pulling yoke 19 is part of a main frame 38 of the seabead vehicle 18. Through the pull of the vessel, the seabed vehicle 18 is skidding on skids 20 over the floor of the seabed 8 along the installation path 16.

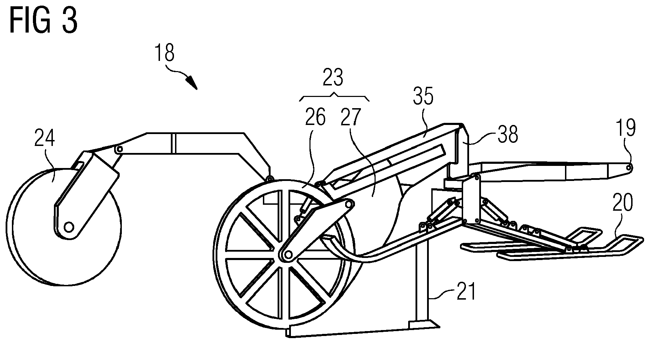

The seabed vehicle comprises a plough 21, as can best be seen in Fig. 3. The plough 21 is fixed to the main frame 38 of the seabead vehicle 18. Through the pull of the vessel at the pulling yoke 19, the plough 21 opens a trench 22 in the seabed 8 (Fig. 2). The tube 17 is continuously unreeled from a winch on the support vessel (not shown) and laid into the trench 22. In particular, the seabed vehicle 18 comprises a depressor 23 (Fig. 3) which can be pivoted downwards for forcing the tube 17 into the trench 22 (Fig. 2). The tube 17 laid into the trench 22 is buried by a roller cutter 24 of the seabed vehicle 18. The process of continuously forming a trench 22, laying the tube 17 in the trench 22 and burying it with the roller cutter 24 is performed until the seabed vehicle 18 reaches a position along the installation path 16 which is close, e.g., closest, to a wind turbine, such as the wind turbine 2.

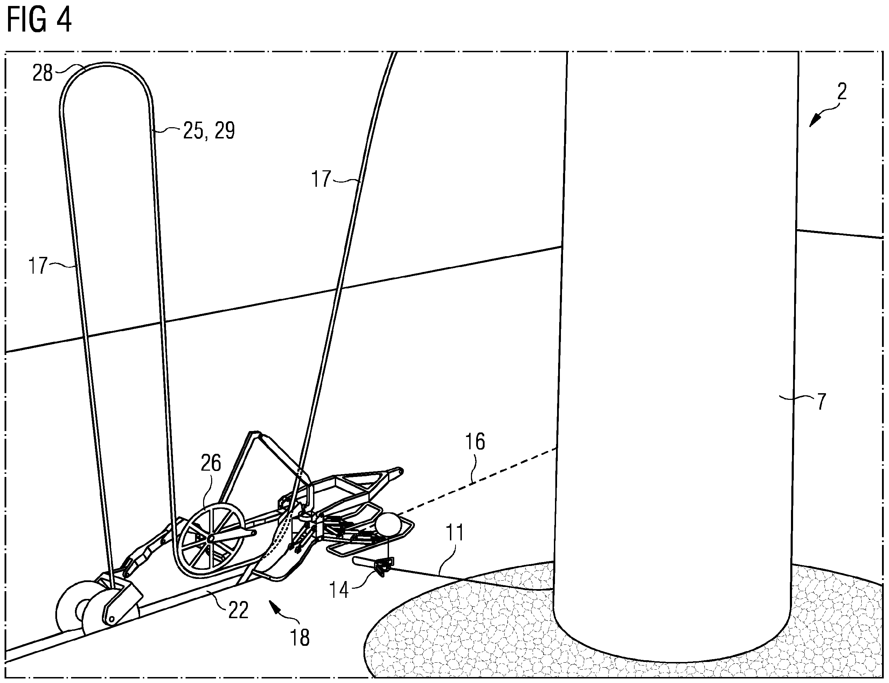

In step S3, an additional length 25 of the tube 17 is provided at the installation path 16 close to the wind turbine 2 (Fig. 4). The additional length 25 is provided by means of the depressor 23.

The depressor 23 comprises, for example, a depressor wheel 26 and a pivoting member 27 (Fig. 3). The depressor wheel 26 is, for example, rotatably supported by the pivoting member 27. The pivoting member 27 is, for example, pivotably supported by the plough 21.

With the pivoting member 27 pivoted downwards (Fig. 2), the depressor 23 is used in step S2 for holding down the tube 17 in the trench 22 prior to burying it. With the pivoting member 27 pivoted upwards (Figs. 4, 5, 8, 9), the depressor 23 is used in step S3 for providing the additional length 25 of the tube 17.

In step S3, firstly the support vessel pulling the seabed vehicle 18 for example slows down its speed. Further, the depressor 23 is lifted by pivoting the pivoting member 27 upwards (Fig. 4). As the tube 17 is filled with air it is floating upwards as far as permitted by the upward lifted depressor 23. The tube 17 is continuously supplied by the support vessel in the upward lifted state of the depressor 23, thereby paying out portions of the tube 17 in form of a loop 28. Paying out of the tube 17 is further supported by rotation of the depressor wheel 26.

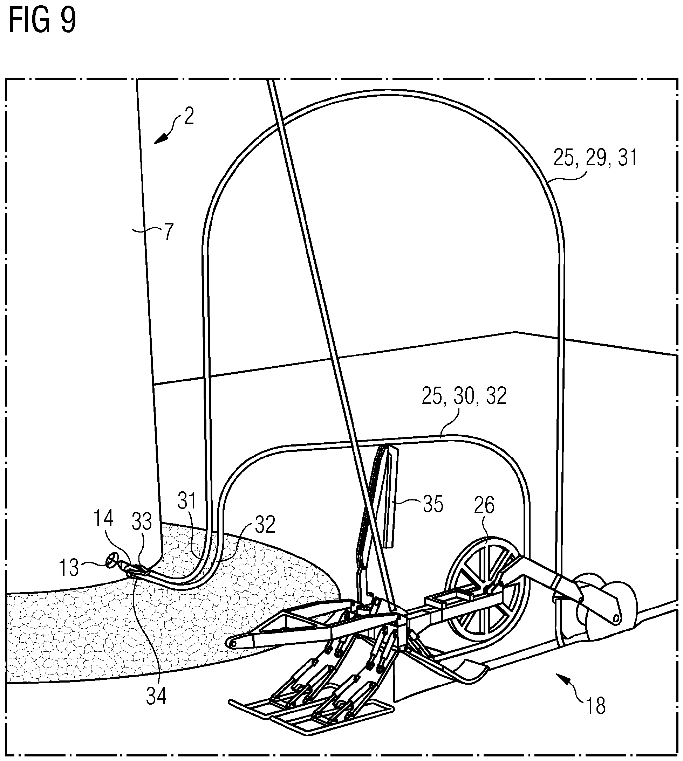

The loop 28 shown in Fig. 4 represents, for example, a first portion 29 of the additional length 25. For example, by pulling on this first portion 29 in the next step S4 in conjunction with the continuous supplying of the tube 17 from the support vessel, a second portion 30 of the additional length 25 is provided (Fig. 9).

The additional length 25, comprising for example the first and second portions 29, 30, is used for forming an incoming tube 31 and an outgoing tube 32 of the wind turbine 2. When the installation of the tube 17 at the wind turbine 2 will be completed, the incoming tube 31 will cover the path from the main installation path 16 to the foundation 7 of the wind turbine 2, through the opening 13 and to the hang-off platform 10 of the wind turbine 2. Furthermore, in the completed state, the outgoing tube 32 will cover the return path from the hang-off platform 10, through the opening 13 and back to main installation path 16.

In step S4, an end 33 of the incoming tube 31 and an end 34 of the outgoing tube 32 are pulled into the wind turbine 2 simultaneously (Fig. 9).

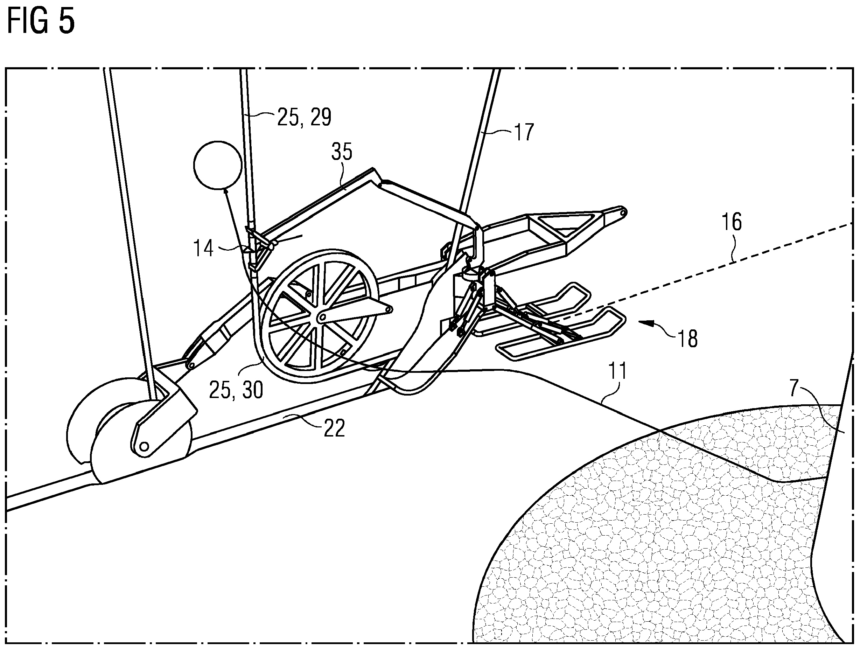

To perform step S4, firstly a robotic arm 35 of the seabed vehicle 18 is grabbing the pulling head 14 (Fig. 5) which has been provided at the right position for grabbing beforehand in step S1. The robotic arm 35 is moving the pulling head 14 towards the payed out additional length 25 of tube 17 and attaches it there. Where the pulling head 14 is attached to the additional length 25 of tube 17 marks in this example the transition between the first portion 29 of the additional length 25 (which will form the incoming tube 31) and the second portion 30 of the additional length 25 (which will form the outgoing tube 32).

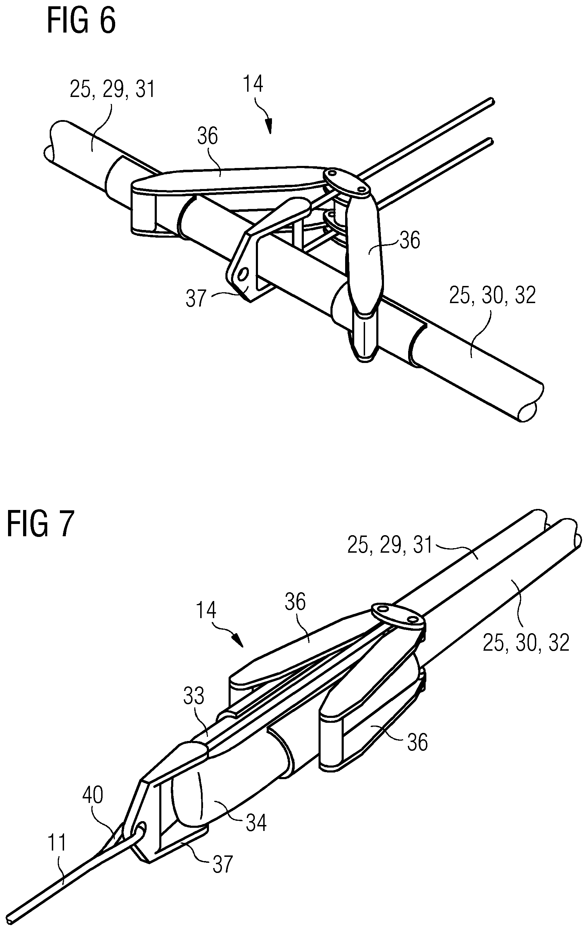

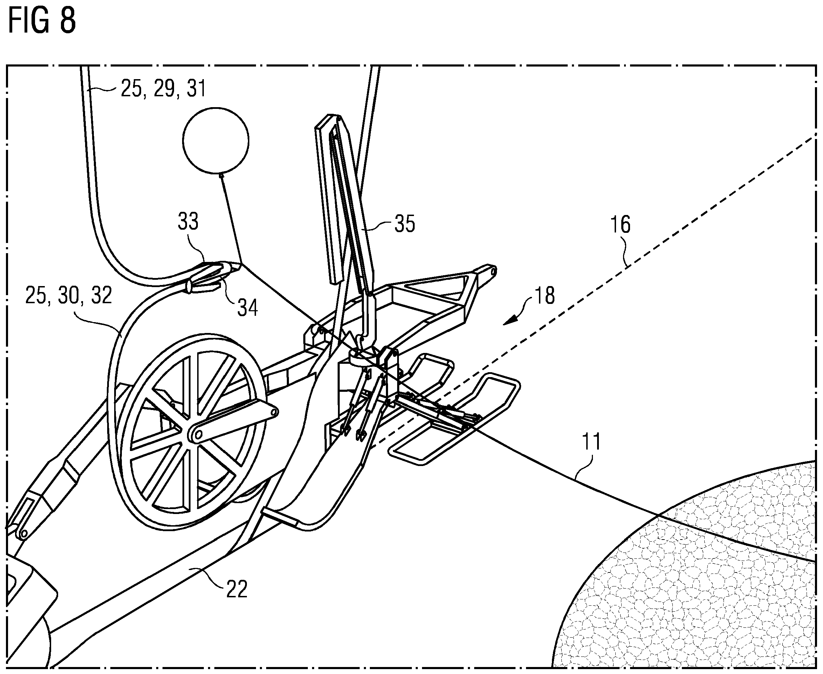

The pulling head 14 has a bending function. The pulling head 14 comprises two arms 36 which can be flapped to bend the additional portion 25 of the tube 17 (Figs. 6, 7). Further, the pulling head 14 comprises a middle portion 37 where the messenger cable 11 can be attached (Fig. 7). When the pulling head 14 is attached to the additional length 25 of the tube 17 the two arms 36 are attached at two spaced apart positions on the additional length 25 (Fig. 6). That means, one arm 36 of the pulling head 14 is attached to the first portion 29 of the additional length 25 forming the incoming tube 31. The other arm 36 of the pulling head 14 is attached to the second portion 30 of the additional length 25 forming the outgoing tube 32. By pulling on the middle portion 37 by means of the messenger cable 11 the arms 36 are flapped and the portion 29 of the additional length 25 forming the incoming tube 31 and the portion 30 of the additional length 25 forming the outgoing tube 32 are bent relative to each other (Fig. 7, 8).

After attaching the pulling head 14 to the incoming and outgoing tubes 31, 32, the messenger cable 11 is pulled into the wind turbine 2 (Fig. 9) by reeling up the winch 12 (Fig. 2). Thus, the ends 33, 34 of the incoming and outgoing tubes 31, 32 are pulled towards the foundation 7 of the wind turbine 2 and through the opening 13 in the foundation 7. The ends 33, 34 of the incoming and outgoing tubes 31, 32 are further pulled upwards inside the foundation 7 and, for example, also inside the tower 6. The ends 33, 34 of the incoming and outgoing tubes 31, 32 are, for example, pulled up to the hang-off platform 10 (Fig. 2).

In step S5, the incoming and outgoing tubes 31, 32 are cut inside the wind turbine 2, for example at the hang-off platform 10. In particular, the portions of the incoming and outgoing tubes 31, 32 damaged by the bending process (Fig. 7) are cut off.

In the further processing, power cables (not shown) can be inserted into the cut incoming and outgoing tubes 31, 32 for electrical connection of the wind turbine 2.

By the described method, the installation of tubes 17 for power cables can be efficiently installed for several wind turbines of a wind park, such as the wind turbine 2, 3 of the wind park 1 shown in Fig. 1. Advantageously, the seabed vehicle 18 is lowered only once from a vessel for connecting the several wind turbines. Further, the seabed vehicle 18 is driving continuously along a main installation path 16 and is providing an additional length 25 of the tube 17 close to each wind turbine (such as the wind turbines 2, 3). At this time, the pulling head 14 with the messenger cable 11 is ready for connection with the additional length 25 at each wind turbine (such as the wind turbines 2, 3). As soon as the additional length 25 forming the incoming and outgoing tubes 31, 32 is provided by the seabed vehicle 18 at a certain wind turbine, it is automatically connected with the pulling head 14 and pulled into the foundation 7 of the wind turbine 2, 3. Inside the wind turbine, the incoming and outgoing tubes 31, 32 can be cut in a dry and shield environment.

Although the present invention has been described in accordance with preferred embodiments, it is obvious for the person skilled in the art that modifications are possible in all embodiments. In particular, instead of the tube 17 also a power cable could be directly installed by the described process steps. In this case, the power cable is directly buried by the seabed vehicle 18 in the seabed 8 in between positions of the wind turbines 2, 3. Further, an additional length of the power cable is provided at each of the wind turbines such as the wind turbine 2, 3. This additional length is then pulled as incoming and outgoing power cable into the respective wind turbine by means of the pulling head 14, the robotic arm 35, and the messenger cable 11.

## Claims

1. A method for offshore installing of power cables or tubes (17) for power cables for wind turbine installations (2, 3), wherein an end of an incoming power cable and an end of an outgoing power cable or an end (33) of an incoming tube (31) and an end (34) of an outgoing tube (32) are pulled (S4) into an offshore wind turbine installation (2) simultaneously.

2. The method according to claim 1, wherein the incoming and outgoing power cables or the incoming and outgoing tubes (31, 32) are, during pulling (S4) their ends (33, 34) into the offshore wind turbine installation (2), of one piece such that their pulled in ends (33, 34) are continuous with each other.

3. The method according to claim 2, wherein pulling (S4) the ends (33, 34) of the incoming and outgoing power cables or of the incoming and outgoing tubes (31, 32) into the offshore wind turbine installation (2) includes bending the incoming and outgoing power cables or the incoming and outgoing tubes (31, 32) relative to each other at their continuous ends (33, 34) .

4. The method according to one of claims 1 - 3, wherein pulling (S4) the ends (33, 34) of the incoming and outgoing power cables or of the incoming and outgoing tubes (31, 32) into the offshore wind turbine installation (2) includes connecting a pulling head (14) with the ends of the incoming and outgoing power cables or with the ends (33, 34) of the incoming and outgoing tubes (31, 32).

5. The method according to one of claims 2 - 4, comprising, after the step of pulling (S4), the step of cutting (S5) the incoming and outgoing power cables or the incoming and outgoing tubes (31, 32) at their continuous ends (33, 34) inside the offshore wind turbine installation (2).

6. The method according to one of claims 1 - 5, comprising the steps of:
installing (S2) a power cable or a tube (17) on or in a seabed (8) by means of a seabed vehicle (18), and
providing (S3) an additional length (25, 29, 30) of the power cable or tube (17) close to the offshore wind turbine installation (2), the additional length (25) forming the incoming and outgoing power cables or the incoming and outgoing tubes (31, 32).

7. The method according to claim 6, wherein the additional length (25) of the power cable or tube (17) is provided by lifting a depressor (23) of the seabed vehicle (18).

8. The method according to claim 7, wherein the additional length (25) of the power cable or tube (17) is provided by rotating a depressor wheel (26) of the depressor (23) of the seabed vehicle (18).

9. The method according to one of claims 6 - 8, wherein the power cable or tube (17) is installed (S2) on or in the seabed (8) by forming a trench (22) in the seabed (8) and laying the power cable or tube (17) into the trench (22).

10. The method according to claim 9, wherein, after laying the power cable or tube (17) into the trench (22), the trench (22) is buried by means of the seabed vehicle (18).

11. The method according to one of claims 1 - 10, wherein the ends (33, 34) of the incoming and outgoing power cables or of the incoming and outgoing tubes (31, 32) are pulled (S4) into the offshore wind turbine installation (2) by means of a messenger cable (11) acting as a pulling rope.

12. The method according to claims 6 and 11, wherein, prior to installing (S2) the power cable or tube (17) on or in the seabed (8) by means of the seabed vehicle (18), one end (39) of the messenger cable (11) is installed inside the offshore wind turbine installation (2) and the other end (40) of the messenger cable (11) is provided outside of the offshore wind turbine installation (2) and below sea level (7).

13. The method according to claim 12, wherein the other end (40) of the messenger cable (11) is provided with buoyancy means (15).

14. The method according to one of claims 1 - 13, wherein the ends of the incoming and outgoing power cables or the ends (33, 34) of the incoming and outgoing tubes (31, 32) are pulled (S4) into the offshore wind turbine installation (2) up to a height (10) above sea level (7).

15. A seabed vehicle (18) for performing at least one step of the method according to one of claims 1 to 14, the seabed vehicle (18) comprising:
- a main frame (38),
- skids (20) for skidding on the seabed (8), the skids (20) being fixed to the main frame (38),
- a plough (21) for forming a trench (22) in the seabed (8), the plough (21) being fixed to the main frame (38),
- burying means (24) for burying the trench (22) after a power cable or tube (17) supplied by a vessel has been laid in the trench (22),
- a pivotable and rotatable depressor (23) for holding down the power cable or tube (17) in the trench (22) prior to burying it and for providing an additional length (25) of the power cable or tube (17) at the offshore wind turbine installation (2) by lifting the depressor (23), the additional length (25) forming the incoming and outgoing power cables or the incoming and outgoing tubes (31, 32) of the offshore wind turbine installation (2), wherein the depressor (23) comprises a depressor wheel (26) and a pivoting member (27), the depressor wheel (26) being supported rotatably by the pivoting member (27), the pivoting member (27) being supported pivotably by the main frame (38) or the plough (21), and
- a robotic arm (35) for grabbing the messenger cable (11) acting as pulling rope and fixing the messenger cable (11) to the power cable or tube (17), the robotic arm (35) being fixed to the main frame (38).
